# EUROPÄISCHE PATENTSCHRIFT

(11) **EP 1 254 330 B1**
(45) Veröffentlichungstag und Bekanntmachung des Hinweises auf die Patenterteilung: **09.11.2005**
(21) Anmeldenummer: 01909434.1
(22) Anmeldetag: 09.01.2001
(51) Int. Cl.: F16J 15/16, F16J 15/32, F16H 57/04

(54) **VORRICHTUNG ZUM ABDICHTEN EINES RAUMS**
DEVICE FOR SEALING A SPACE
DISPOSITIF POUR ETANCHEIFIER UN VOLUME

(30) Priorität: 28.01.2000 DE 10003772
(43) Veröffentlichungstag der Anmeldung: 06.11.2002
(73) Patentinhaber: ROBERT BOSCH GMBH, 70442 Stuttgart (DE)
(72) Erfinder: FRAUHAMMER, Karl, 70771 Leinfelden-Echterdingen (DE); SCHNERRING, Heinz, 72135 Dettenhausen (DE); FRIEDRICH, Joerg, 70794 Filderstadt (DE); STRASSER, Andreas, 73635 Rudersberg (DE); BLAIER, Karsten, 88045 Friedrichshafen/Bodensee (DE)
(86) Internationale Anmeldenummer: PCT/DE2001/000047
(87) Internationale Veröffentlichungsnummer: WO 2001/055623

(56) Entgegenhaltungen:
- EP-A- 0 473 908
- GB-A- 1 136 632
- US-A- 4 582 170
- US-A- 5 110 143
- PATENT ABSTRACTS OF JAPAN vol. 017, no. 083 (M-1369), 18. Februar 1993 (1993-02-18) & JP 04 282058 A (SUMITOMO HEAVY IND LTD), 7. Oktober 1992 (1992-10-07)
- PATENT ABSTRACTS OF JAPAN vol. 009, no. 303 (M-434), 30. November 1985 (1985-11-30) & JP 60 139970 A (HITACHI SEISAKUSHO KK), 24. Juli 1985 (1985-07-24)

## Beschreibung

### Stand der Technik

Die Erfindung betrifft eine Vorrichtung zum Abdichten eines Raums.

Bei mechanischen Getrieben sind rotierende Zapfen, die durch eine das Getriebe umschließende Gehäusewand ragen, abzudichten, beispielsweise bei einem mit Öl gefüllten Getriebegehäuse einer Handwerkzeugmaschine, damit ein Ölverlust vermieden wird. Der Fachmann verwendet hierzu ringförmige Dichtungen, die den zapfen umschließen. Über eine auf einer Lauffläche des Zapfens schleifende Dichtlippe der Dichtung ist das Gehäuse nach außen abgedichtet. Um eine dauerhafte Dichtwirkung zu erreichen, wird die Dichtlippe an der Kontaktfläche in der Regel durch das Öl im Gehäuse geschmiert, indem beispielsweise ein Pegel des Öls höher ist als eine Anordnung der Dichtung im Gehäuse.

Ferner ist aus der US 4,582,170 eine Dichtungsanordnung mit einem Dichtungspaket in einem Lagergehäuse bekannt, bei dem ein Schmiermittel von außen über eine Einleitungsrippe in einen Dichtungsraum eingeführt wird. Das Schmiermittel wird über die Einleitungsrippe auf eine rotierend antreibbare Welle zugeführt und wird auf der Oberfläche der rotierend angetriebenen Welle verwirbelt, wobei Dichtungslippen des Dichtungspakets durch das Schmiermittel geschmiert werden. Erreicht das Schmiermittel eine bestimmte Geschwindigkeit, wird dieses von der rotierenden Welle durch eine Zentrifugalkraft radial nach außen geschleudert. Im Dichtungsraum des Lagergehäuses sind zwei Abweisungsrippen an das Lagergehäuse angeformt, die radial nach innen tangential zur Welle in deren Rotationsrichtung weisen. Das Schmiermittel wird durch seine eigene Gewichtskraft entlang den Abweisungsrippen zur Oberfläche der Welle zurückgeleitet und erreicht wieder die Dichtungslippen des Dichtungspakets, um diese zu schmieren.

### Vorteile der Erfindung

Es wird eine Vorrichtung zum Abdichten eines Raums mit Schmiermittel an einem rotierend antreibbaren Bauteil zu einem zweiten Raum, insbesondere an einem Zapfen einer Handwerkzeugmaschine, mit zumindest einer an einer Kontaktfläche schleifenden Dichtung vorgeschlagen, wobei in dem mit Schmiermittel gefüllten Raum vor der Kontaktfläche zumindest ein ruhendes Bauteil angeordnet ist, das das rotierend antreibbare Bauteil wenigstens über einen Bereich seines Umfangs umschließt und Verwirbelungen des Schmiermittels im Bereich der Kontaktfläche zumindest weitgehend vermeidet und wobei die schleifende Dichtung über zumindest eine Ausnehmung frei mit dem mit Schmiermittel gefüllten Raum verbunden ist. Durch das als Strömungsbremse wirkende ruhende Bauteil und durch das Vermeiden von Verwirbelungen können vorteilhaft ein Abreißen des Schmierfilms, insbesondere bei hohen Drehzahlen des rotierend antreibbaren Bauteils an der Kontaktfläche zwischen einer Dichtlippe der Dichtung und dem rotierend antreibbaren Bauteil und ein Trockenlaufen verhindert werden. Eine gute Schmierung und eine sichere Abdichtung mit einer hohen Lebensdauer können erreicht werden, beispielsweise bei einer Ankerwelle einer Handwerkzeugmaschine.

Ferner wird vorgeschlagen, daß vor der Kontaktfläche an ein Gehäuseteil zumindest ein angeformter Steg angeordnet ist. Mit dem an das Gehäuseteil angeformten Steg können konstruktiv einfach und kostengünstig ohne zusätzliche Bauteile Verwirbelungen im Schmiermittel im Bereich der Dichtung reduziert oder weitgehend vermieden werden. Ein oder mehrere Stege können dabei das rotierend antreibbare Bauteil teilweise oder vollständig umschließen. Daneben kann der Steg weitere mechanische Funktionen beinhalten, beispielsweise das Fixieren weiterer Bauteile.

Besonders vorteilhaft können jedoch Verwirbelungen im Schmiermittel im Bereich der Dichtung reduziert bzw. verhindert werden, indem vor der Kontaktfläche eine das rotierend antreibbare Bauteil umschließende Hülse angeordnet ist.

In einer weiteren Ausgestaltung wird ferner vorgeschlagen, daß die Hülse am Steg befestigt ist. Die Hülse kann dadurch konstruktiv einfach und kostengünstig in ihrer Stellung fixiert werden, wobei die Hülse durch einen oder mehrere Stege gehalten sein kann. Die Hülse kann einstückig mit einem oder mehreren Stegen ausgeführt oder mit einem oder mehreren Stegen über eine kraftschlüssige, formschlüssige und/oder stoffschlüssige Verbindung befestigt sein.

Vorteilhaft besitzt die Hülse in axialer Richtung eine Länge von mindestens 2 mm. Je länger die Hülse, um so besser können Verwirbelungen im Schmiermittel im Bereich der Dichtung vermieden werden. Ferner besitzt die Hülse vorteilhaft einen kleinen axialen Abstand zur Kontaktfläche der Dichtung und einen kleinen radialen Abstand zum rotierend antreibbaren Bauteil, und zwar vorteilhaft kleiner als 1 mm.

Ferner wird vorgeschlagen, daß zwischen zumindest zwei Stegen wenigstens eine Ausnehmung eingebracht ist. Durch die Ausnehmung kann vorteilhaft ein Schmiermittelaustausch und eine dadurch bedingte lange Standzeit des Schmiermittels erreicht werden. Grundsätzlich ist jedoch auch eine Aufteilung in zwei mit Schmiermittel gefüllte Räume denkbar, und zwar in einen Raum, der durch die Hülse, den Steg, das Gehäuse, die Dichtung und das rotierend antreibbare Bauteil begrenzt ist und in einen weiteren Raum, in dem beispielsweise ein Getriebe angeordnet ist.

Rotierende Verzahnungen können zu starken Verwirbelungen und Strömungen im Schmiermittel führen. Umschließt das ruhende Bauteil die Verzahnung, können die Verwirbelungen im Schmiermittel im Bereich der Dichtung effektiv reduziert bzw. verhindert werden.

In einer weiteren Ausgestaltung wird vorgeschlagen, daß im zweiten Raum vor der Dichtung eine mit dem rotierend antreibbaren Bauteil in Wirkverbindung stehende Förderwendel angeordnet ist, die zumindest weitgehend über einen Bereich ihres Umfangs von einem ruhenden Bauteil umschlossen ist. Das durch eine kleine Leckage der Dichtung austretende Schmiermittel kann der Dichtung wieder zugeführt werden. Damit kann die Schmierwirkung der Dichtung neben den oben vorgeschlagenen Maßnahmen, mit denen im Schmiermittel das Bilden von Verwirbelungen im Bereich der Dichtung zumindest weitgehend reduziert werden kann, zusätzlich verbessert werden. Die Dichtlippe kann besonders vorteilhaft beidseitig geschmiert und es kann eine große Lebensdauer erreicht werden, insbesondere bei einer mit hoher Drehzahl rotierenden Ankerwelle einer Handwerkzeugmaschine.

Um Bauteile einzusparen, kann die Förderwendel in das rotierend antreibbare Bauteil eingebracht sein. Besonders Kostengünstig kann die Förderwendel jedoch auch in eine separate Hülse eingebracht sein, die mit dem rotierend antreibbaren Bauteil verbunden ist. Die Hülse mit der Förderwendel kann zudem einstückig mit einem Laufring für die Dichtung ausgeführt sein, wodurch zusätzliche Bauteile und Montageaufwand eingespart werden können.

Um aus dem ersten Raum eventuell ausgetretene geringfügige Mengen Schmiermittel im zweiten Raum speichern und eine kontinuierliche Versorgung der Dichtlippe der Dichtung mit Schmiermittel aus dem zweiten Raum gewährleisten zu können, wird vorgeschlagen, daß axial zwischen der Kontaktfläche und der Förderwendel ein Filzring angeordnet ist. Neben einer Speicherwirkung des Filzrings kann durch die Anordnung des Filzrings eine zusätzliche Dichtwirkung erreicht werden.

Der Filzring kann als schleifende Dichtung ausgeführt sein. Um jedoch ausgetretenes Schmiermittel der Dichtung vorteilhaft wieder zuführen zu können, weist der Filzring zu einem angrenzenden Bauteil einen Spalt auf, über den durch die Förderwendel das Schmiermittel zur Dichtung förderbar ist. Eine Reibung und ein Verschleiß zwischen dem Filzring und dem angrenzenden Bauteil können vermieden werden. Der Filzring ist vorteilhaft in einer die Förderwendel umschließenden Hülse gehalten. Zusätzliche Bauteile, Montageaufwand und Kosten können eingespart werden.

Um zu vermeiden, daß Schmiermittel aus dem zweiten Raum nach außen dringt, ist dieser vorteilhaft zudem zumindest mit einer Filzdichtung nach außen abgedichtet.

Die erfindungsgemäße Lösung kann bei zahlreichen, dem Fachmann als sinnvoll erscheinenden Vorrichtung angewendet werden und insbesondere bei Handwerkzeugmaschinen, bei denen vorteilhaft platzsparende, leichte und kostengünstige Dichtvorrichtungen, insbesondere für schnell drehende Bauteile mit einer langen Lebensdauer erreicht werden können.

### Zeichnung

Weitere Vorteile ergeben sich aus der folgenden Zeichnungsbeschreibung. In der Zeichnung ist ein Ausführungsbeispiel der Erfindung dargestellt.

Es zeigen:
- Fig. 1: eine schematische Darstellung eines Bohrhammers,
- Fig. 2: einen vergrößerten Ausschnitt II in Fig. 1 und
- Fig. 3: einen Schnitt entlang der Linie III - III in Fig. 2.

### Beschreibung des Ausführungsbeispiels

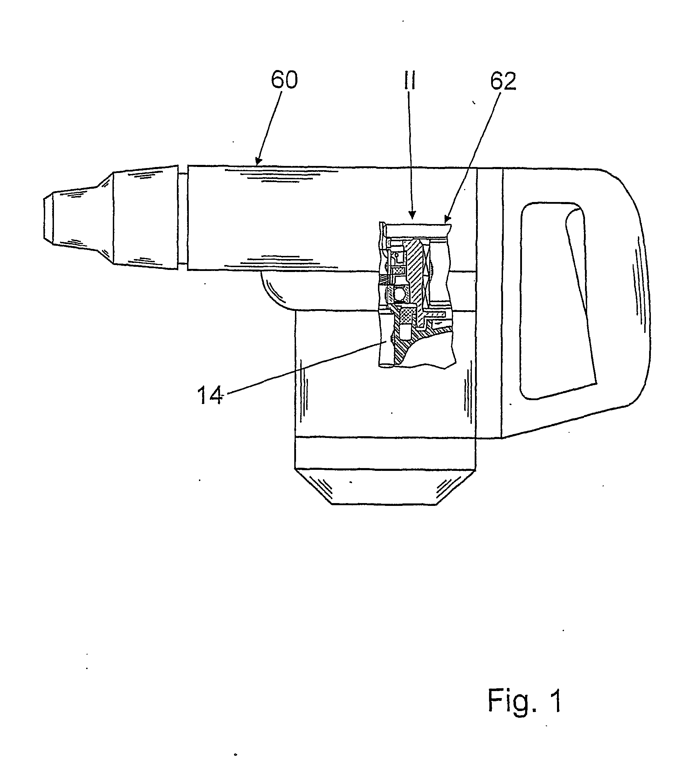

Fig. 1 zeigt einen schematisch dargestellten Bohrhammer mit einem in einem Gehäuse 60 nicht näher dargestellten Elektromotor. Der Elektromotor treibt mit einer Ankerwelle 14 über ein Getriebe 62 eine Bohrspindel und ein Schlagwerk an.

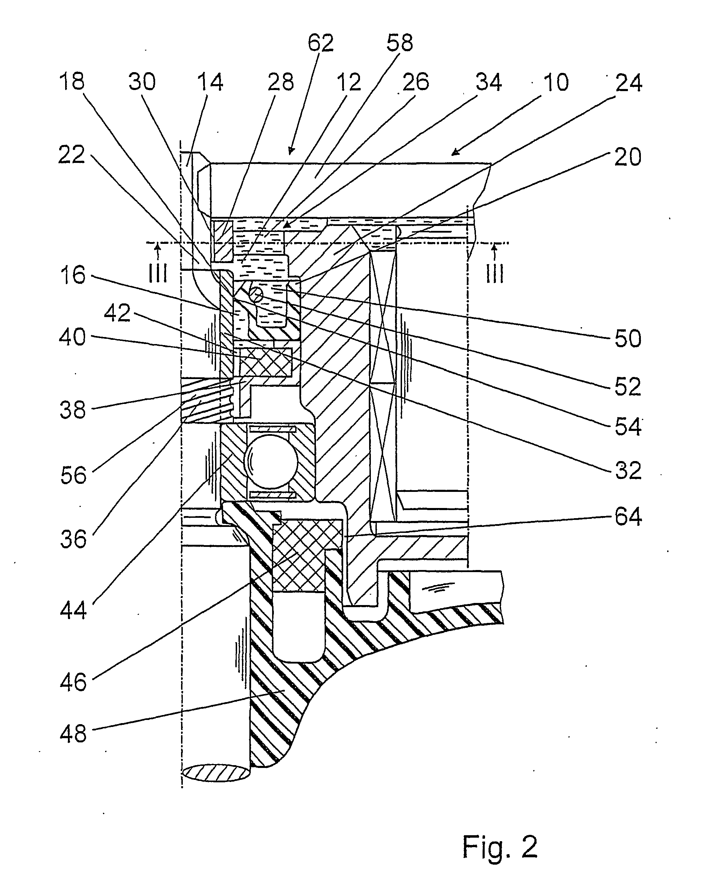

Fig. 2 zeigt eine Vorrichtung zum Abdichten eines Getrieberaums 10 des Bohrhammers mit Schmiermittel 12 an der Ankerwelle 14 in Richtung Elektromotor zu einem zweiten Raum 16 mit einer an einer Kontaktfläche 18 schleifenden Dichtung 20. Eine Dichtlippe 54 der Dichtung 20 ist über einen Spannring 52 radial nach innen gegen einen auf der Ankerwelle 14 aufgepreßten Laufring 32 belastet.

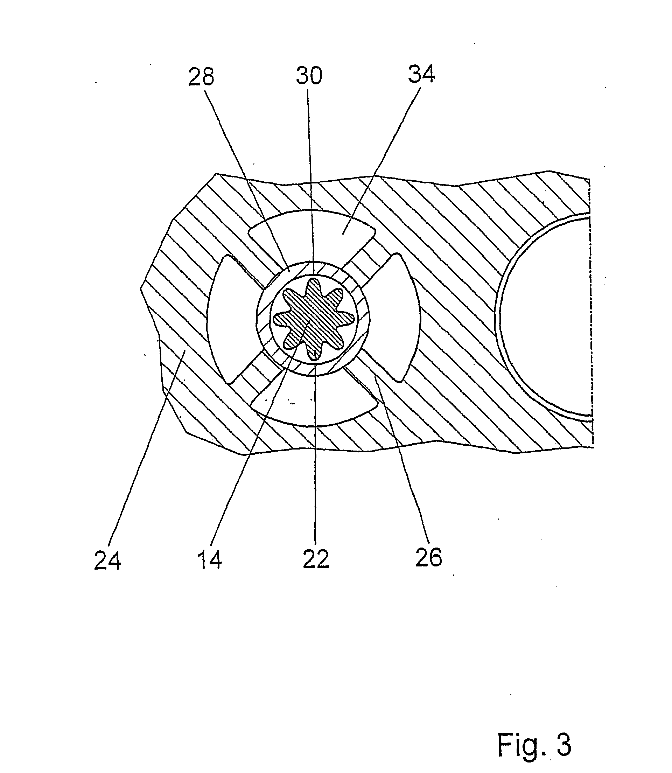

Erfindungsgemäß ist im mit Schmiermittel 12 gefüllten Getrieberaum 10 vor der Kontaktfläche 18 eine ruhende Hülse 28 angeordnet, die die Ankerwelle 14 im Bereich einer Verzahnung 22 über ihren Umfang umschließt und Verwirbelungen des Schmiermittels 12 im Bereich der Kontaktfläche 18 vermeidet. Vor der Kontaktfläche 18 sind vier an ein Gehäuseteil 24 aus Leichtmetallguß des Schlagwerks angeformte Stege 26 angeordnet, an die die Hülse 28 einstückig angeformt ist (Fig. 3). Die Hülse 26 weist in axialer Richtung eine Länge von größer als 2 mm auf und schließt vorteilhaft zu einer ersten Seite mit einem axialen Abstand kleiner als 2 mm zu einem in der Verzahnung 22 kämmenden Stirnrad 58 des Getriebes 62 und zu einer zweiten Seite mit einem axialen Abstand kleiner als 2 mm zum Laufring 32 ab. Zu Zahnspitzen der Verzahnung 22 besitzt die Hülse 26 einen radialen Abstand 30 kleiner als 1 mm (Fig. 3).

Zwischen den Stegen 26 sind jeweils Ausnehmungen 34 eingebracht, die einen Raum 50, der durch die Ankerwelle 14, die Dichtung 20, das Gehäuseteil 24, die Stege 26 und die Hülse 28 begrenzt ist, mit dem Getrieberaum 10 verbinden und einen Schmiermittelaustausch ermöglichen (Fig. 2 und 3).

Im zweiten Raum 16 ist vor der Dichtung 20 eine Hülse 56 auf der Ankerwelle 14 aufgepreßt, in die eine Förderwendel 36 eingebracht ist, die über ihren Umfang von einer ruhenden am Gehäuseteil 24 befestigten Hülse 38 umschlossen ist. Die Hülse 56 ist im ungeschnittenen Zustand dargestellt. Axial zwischen der Kontaktfläche 18 und der Förderwendel 36 ist ein Filzring 40 angeordnet. Der Filzring 40 ist in der die Förderwendel 36 umschließenden Hülse 38 gehalten und weist zur Ankerwelle 14 einen Spalt 42 auf, über den durch die Förderwendel 36 das Schmiermittel 12 zur Dichtung 20 förderbar ist.

Der zweite Raum 16 ist ferner in Richtung Elektromotor nach einem Lager 44 der Ankerwelle 14 über eine Filzdichtung 46 abgedichtet, die in einem auf der Ankerwelle 14 aufgepreßten Lüfterrad 48 formschlüssig befestigt ist und zum Gehäuseteil 24 eine Spaltdichtung 64 einschließt.

Durch die Stege 26 und'die.Hülse 28 werden bei einer hohen Drehzahl der Ankerwelle 14 Verwirbelungen des Schmiermittels 12 im Bereich der Dichtung 20, insbesondere im Bereich der Kontaktfläche 18 und ein Trockenlaufen der Dichtung 20 vermieden. Zugleich wird eine aus dem Raum 10 ausgetretene geringe Menge Schmiermittel 12 im zweiten Raum 16 mit einer aus der Förderwendel 36 und der Hülse 38 gebildeten Fördereinrichtung über den zwischen dem Filzring 40 und dem Laufring 32 bestehenden Spalt 42 in Richtung Dichtung 20 zurückgefördert. Die Dichtlippe 54 der Dichtung 20 wird während des Betriebs vorteilhaft beidseitig geschmiert. Im Filzring 40 wird Schmiermittel 12 gespeichert.

### Bezugszeichen

- 10: Raum
- 12: Schmiermittel
- 14: Bauteil
- 16: Zweiter Raum
- 18: Kontaktfläche
- 20: Dichtung
- 22: Verzahnung
- 24: Gehäuseteil
- 26: Steg
- 28: Ruhendes Bauteil
- 30: Abstand
- 32: Laufring
- 34: Ausnehmung
- 36: Förderwendel
- 38: Bauteil
- 40: Filzring
- 42: Spalt
- 44: Lager
- 46: Filzdichtung
- 48: Lüfterrad
- 50: Raum
- 52: Spannring
- 54: Dichtlippe
- 56: Hülse
- 58: Stirnrad
- 60: Gehäuse
- 62: Getriebe
- 64: Spaltdichtung

## Patentansprüche

1. Vorrichtung zum Abdichten eines Raums (10) mit Schmiermittel (12) an einem rotierend antreibbaren Bauteil (14) zu einem zweiten Raum (16), insbesondere an einem Zapfen einer Handwerkzeugmaschine, mit zumindest einer an einer Kontaktfläche (18) schleifenden Dichtung (20), wobei im mit Schmiermittel (12) gefüllten Raum (10) vor der Kontaktfläche (18) zumindest ein ruhendes Bauteil (28) angeordnet ist, das das rotierend antreibbare Bauteil (14) wenigstens über einen Bereich seines Umfangs umschließt und Verwirbelungen des Schmiermittels (12) im Bereich der Kontaktfläche (18) zumindest weitgehend vermeidet und wobei die schleifende Dichtung über zumindest eine Ausnehmung frei mit dem mit Schmiermittel gefüllten Raum verbunden ist.

2. Vorrichtung nach Anspruch 1, **dadurch gekennzeichnet, daß** vor der Kontaktfläche (18) an ein Gehäuseteil (24) zumindest ein angeformter Steg (26) angeordnet ist.

3. Vorrichtung nach Anspruch 1 oder 2, **dadurch gekennzeichnet, daß** vor der Kontaktfläche (18) eine das rotierend antreibbare Bauteil (14) umschließende Hülse (28) angeordnet ist.

4. Vorrichtung nach Anspruch 2 oder 3, **dadurch gekennzeichnet, daß** die Hülse (28) am Steg (26) befestigt ist.

5. Vorrichtung nach Anspruch 3 oder 4, **dadurch gekennzeichnet, daß** die Hülse (26) in axialer Richtung eine Länge von mindestens 2 mm aufweist.

6. Vorrichtung nach einem der Ansprüche 2 bis 5, **dadurch gekennzeichnet, daß** zwischen zumindest zwei Stegen (26) wenigstens eine Ausnehmung (34) eingebracht ist.

7. Vorrichtung nach einem der vorhergehenden Ansprüche, **dadurch gekennzeichnet, daß** das ruhende Bauteil (28) eine Verzahnung (22) umschließt.

8. Vorrichtung nach einem der vorhergehenden Ansprüche, **dadurch gekennzeichnet, daß** das ruhende Bauteil (28) zum rotierend antreibbaren Bauteil (14) einen radialen Abstand kleiner als 1 mm aufweist.

9. Vorrichtung nach einem der vorhergehenden Ansprüche, **dadurch gekennzeichnet, daß** im zweiten Raum (16) vor der Dichtung (20) eine mit dem rotierend antreibbaren Bauteil (14) in Wirkverbindung stehende Förderwendel (36) angeordnet ist, die zumindest weitgehend über einen Bereich ihres Umfangs von einem zweiten ruhenden Bauteil (38) umschlossen ist.

10. Vorrichtung nach Anspruch 9, **dadurch gekennzeichnet, daß** axial zwischen der Kontaktfläche (18) und der Förderwendel (36) ein Filzring (40) angeordnet ist.

11. Vorrichtung nach Anspruch 10, **dadurch gekennzeichnet, daß** der Filzring (40) zu einem angrenzenden Bauteil (38) einen Spalt (42) aufweist, über den durch die Förderwendel (36) das Schmiermittel (12) zur Dichtung (20) förderbar ist.

12. Vorrichtung nach Anspruch 10 und 11, **dadurch gekennzeichnet, daß** in einer die Förderwendel (36) umschließenden Hülse (38) der Filzring (40) gehalten ist.

13. Vorrichtung nach einem der vorhergehenden Ansprüche, **dadurch gekennzeichnet, daß** der zweite Raum (16) über zumindest eine Filzdichtung (46) nach außen abgedichtet ist.

## Claims

1. Device for sealing a space (10) containing lubricant (12) at a rotationally drivable component (14) relative to a second space (16), in particular at a journal of a powered hand tool, having at least one seal (20) rubbing on a contact surface (18), at least one static component (28) being arranged in the space (10), filled with lubricant (12), in front of the contact surface (18), this static component (28) enclosing the rotationally drivable component (14) at least over a region of its periphery and at least largely avoiding swirling of the lubricant (12) in the region of the contact surface (18), and the rubbing seal being freely connected via at least one aperture to the space filled with lubricant.

2. Device according to Claim 1, **characterized in that**, in front of the contact surface (18), at least one integrally formed web (26) is arranged on a housing part (24).

3. Device according to Claim 1 or 2, **characterized in that** a sleeve (28) enclosing the rotationally drivable component (14) is arranged in front of the contact surface (18).

4. Device according to Claim 2 or 3, **characterized in that** the sleeve (28) is fastened to the web (26).

5. Device according to Claim 3 or 4, **characterized in that** the sleeve (26) has a length of at least 2 mm in the axial direction.

6. Device according to one of Claims 2 to 5, **characterized in that** at least one aperture (34) is arranged between at least two webs (26).

7. Device according to one of the preceding claims, **characterized in that** the static component (28) encloses a tooth system (22).

8. Device according to one of the preceding claims, **characterized in that** the static component (28) is at a radial distance of less than 1 mm from the rotationally drivable component (14).

9. Device according to one of the preceding claims, **characterized in that** a conveying helix (36) in operative connection with the rotationally drivable component (14) is arranged in the second space (16) in front of the seal (20), a second static component (38) enclosing this conveying helix (36) at least largely over a region of its periphery.

10. Device according to Claim 9, **characterized in that** a felt ring (40) is arranged axially between the contact surface (18) and the conveying helix (36).

11. Device according to Claim 10, **characterized in that** the felt ring (40) has a gap (42) relative to an adjacent component (14), via which gap (42) the lubricant (12) can be conveyed to the seal (20) by the conveying helix (36).

12. Device according to Claims 10 and 11, **characterized in that** the felt ring (40) is held in a sleeve (38) enclosing the conveying helix (36).

13. Device according to one of the preceding claims, **characterized in that** the second space (16) is sealed off to the outside via at least one felt seal (46).

## Revendications

1. Dispositif pour isoler hermétiquement une chambre (10) contenant du lubrifiant (12) dans la région d'un composant (14) pouvant être entraîné en rotation, d'une deuxième chambre (16), en particulier dans la région d'un tourillon d'un outil portatif, qui comprend au moins une garniture d'étanchéité (20) qui frotte sur une surface de contact (18), avec, dans la chambre (10) remplie de lubrifiant (12) en avant de la surface de contact (18), au moins un élément fixe (28) qui entoure le composant (14) pouvant être entraîné en rotation, au moins sur une région de sa circonférence, et qui évite au moins dans une large mesure la mise en mouvement tourbillonnaire du lubrifiant dans la région de la surface de contact (18), et dans lequel
la garniture d'étanchéité frottante est reliée librement à la chambre rempli de lubrifiant par au moins un évidement.

2. Dispositif selon la revendication 1,
**caractérisé en ce qu'**
en avant de la surface de contact (18) au moins une nervure (26) est formée sur une partie de carter (24).

3. Dispositif selon la revendication 1 ou 2,
**caractérisé en ce qu'**
en avant de la surface de contact (18) est disposée une douille (28) qui entoure l'élément (14) pouvant être entraîné en rotation.

4. Dispositif selon la revendication 2 ou 3,
**caractérisé en ce que**
la douille (28) est fixée à la nervure (26).

5. Dispositif selon la revendication 3 ou 4,
**caractérisé en ce que**
la douille (28) présente une longueur d'au moins 2 mm dans la direction axiale.

6. Dispositif selon la revendication 3 ou 4,
**caractérisé en ce qu'**
au moins un évidement (34) est prévu entre au moins deux nervures (26).

7. Dispositif selon une des revendications précédentes,
**caractérisé en ce que**
l'élément fixe (28) entoure une denture (22).

8. Dispositif selon une des revendications précédentes,
**caractérisé en ce que**
l'élément fixe (28) présente un écartement radial de moins de 1 mm par rapport au composant(14) pouvant être entraîné en rotation.

9. Dispositif selon une des revendications précédentes,
**caractérisé en ce que**,
dans la deuxième chambre (16) est disposée, en avant de la garniture d'étanchéité (20), une hélice de transport (36) qui est en liaison active avec le composant (14) pouvant être entraîné en rotation et qui est entourée par un second élément fixe (38), du moins dans une large mesure, sur une région de sa circonférence.

10. Dispositif selon la revendication 9,
**caractérisé en ce qu'**
une bague en feutre (40) est disposée axialement entre la surface de contact (18) et l'hélice de transport (36).

11. Dispositif selon la revendication 10,
**caractérisé en ce que**
la bague en feutre (40) présente, en direction d'un élément adjacent (38) une fente (42) à travers laquelle le lubrifiant (12) peut être refoulé vers la garniture d'étanchéité (20) par l'hélice de transport (36).

12. Dispositif selon la revendication 10 et 11,
**caractérisé en ce que**
la bague en feutre (40) est tenue dans une douille (38) qui entoure l'hélice de transport (36).

13. Dispositif selon une des revendications précédentes,
**caractérisé en ce que**
la deuxième chambre (16) est isolée hermétiquement de l'extérieur par au moins une garniture d'étanchéité en feutre (46).
